# EUROPÄISCHE PATENTSCHRIFT

(11) **EP 3 885 110 B1**
(45) Veröffentlichungstag und Bekanntmachung des Hinweises auf die Patenterteilung: **13.03.2024**
(21) Anmeldenummer: 20165392.0
(22) Anmeldetag: 24.03.2020
(51) Int. Cl.: B29C 65/02, B29C 65/22, B65B 11/58, B65B 51/10, B29C 65/78

(54) **VERFAHREN ZUM VERSCHWEISSEN ZWEIER SICH ÜBERLAPPENDER UND AUF DER OBERSEITE EINES GUTSTAPELS BEFINDLICHER FOLIENABSCHNITTE ZUM BILDEN EINER UMHÜLLUNG SOWIE VORRICHTUNG ZUM VERSCHWEISSEN ZWEIER SICH ÜBERLAPPENDER UND AUF DER OBERSEITE EINES GUTSTAPELS BEFINDLICHER FOLIENABSCHNITTE ZUM BILDEN EINER UMHÜLLUNG**
METHOD FOR WELDING TWO OVERLAPPING FILM SECTIONS LOCATED ON THE UPPER SIDE OF A STACK OF GOODS TO FORM A SURROUNDING AND DEVICE FOR WELDING TWO OVERLAPPING FILM SECTIONS LOCATED ON THE TOP OF A STACK TO FORM A SURROUNDING
PROCÉDÉ DE SOUDAGE DE DEUX SECTIONS DE FEUILLE SE CHEVAUCHANT ET SE TROUVANT SUR LA FACE SUPÉRIEURE D'UNE PILE DE MARCHANDISES POUR FORMER UNE ENVELOPPE, AINSI QUE DISPOSITIF DE SOUDAGE DE DEUX SECTIONS DE FEUILLE SE CHEVAUCHANT ET SE TROUVANT SUR LA FACE SUPÉRIEURE D'UNE PILE DE MARCHANDISES POUR FORMER UNE ENVELOPPE

(43) Veröffentlichungstag der Anmeldung: 29.09.2021
(73) Patentinhaber: MSK - Verpackungs-Systeme GmbH, 47533 Kleve (DE)
(72) Erfinder:
(74) Vertreter: Dr. Stark & Partner Patentanwälte mbB

(56) Entgegenhaltungen:
- EP-A1- 1 988 020
- WO-A1-85/01913
- US-A- 4 834 830

## Beschreibung

Die Erfindung betrifft ein Verfahren zum Verschweißen zweier sich überlappender und auf der Oberseite eines Gutstapels befindlicher Folienabschnitte zum Bilden einer Umhüllung, wobei das Verschweißen mittels eines Schweißbalkens erfolgt und wobei der Schweißbalken eine konvex gekrümmt ausgebildete Schweißfläche aufweist und wobei zum Verschweißen der Schweißbalken aus seiner Ruhestellung, in welcher der Schweißbalken in einem Abstand zu den zu verschweißenden Folienabschnitten angeordnet ist, in Richtung der Oberseite des Gutstapels in seine Schweißposition bewegt und mit dem oberen Folienabschnitt der beiden sich überlappenden und miteinander zu verschweißenden Folienabschnitte in Kontakt gebracht wird.

Bei der Schweißfläche kann es sich beispielsweise um einen Schweißdraht handeln. Die Schweißfläche kann sehr dünn ausgebildet sein. Nach dem Schweißvorgang wird der Schweißbalken wieder angehoben, vorzugsweise aus seiner Schweißposition zurück in seine Ruhestellung verlagert.

In der Praxis können Gutstapel nicht unbeachtliche Abmessungen aufweisen. So kann beispielsweise ein aus Gipskartonplatten bestehender Gutstapel eine Länge von mehr als 5 m und eine Breite von mehr als 2 m aufweisen. Aufgrund der Abmessungen ist ein Umhüllen mit einer Haube nicht möglich, da bei einer Haube entsprechende Öffnungsmaße schwer realisierbar sind. Daher wird auf die Oberseite des Gutstapels eine Deckblattfolie aufgelegt und anschließend eine Folienbanderole um den Gutstapel herumgelegt. Die Folienbanderole ist so um den Gutstapel herum gelegt, dass die Folienbanderole unter Bildung eines Überstandes oberseitig übersteht. Der Überstand wird dann auf die Deckblattfolie umgelegt. Um eine hinreichende Wasserdichtigkeit zu gewährleisten, wird anschließend der Überstand der Folienbanderole und die Deckblattfolie mittels absenkbarer Schweißbalken verschweißt. Die Schweißbalken werden von oben auf die zu verschweißenden Folienabschnitte abgesenkt, bis die Schweißbalken mit ihrer Schweißfläche in Kontakt mit dem oberen Folienabschnitt sind. Als nachteilig erweist sich, dass die Oberseite des Gutstapels aufgrund der großen Abmessungen durchbiegt. Es ist aber auch durchaus möglich, dass die Oberseite des Gutstapels beispielsweise in der Mitte nach oben gewölbt ausgebildet ist. Dies hat zur Folge, dass sowohl bei einer durchgebogenen als auch bei einer nach oben gewölbten Oberseite des Gutstapels der Schweißbalken nicht auf seiner ganzen Länge seiner Schweißfläche, sondern nur mit seinen beiden Enden, auf dem Folienabschnitt aufliegt, so dass insoweit entlang der Schweißfläche eine gleichmäßige Versiegelung nicht an jedem Punkt möglich ist.

Aus der EP 1 988 020 A1 ist eine Vorrichtung und ein Verfahren zur kontinuierlichen Herstellung von Fliesen oder dergleichen bekannt. Die US-PS 4,834,830 offenbart eine Schwingdrahtanordnung für Packmaschinen. Die WO 85/01913 A1 beschreibt eine Vorrichtung und ein Verfahren zum Verpressen von flexiblen Folien sowie nach dem Verfahren hergestellte Tastatur.

Aufgabe der Erfindung ist es, die vorgenannten Nachteile zu vermeiden und ein Verfahren anzugeben, das eine bessere Versiegelung zweier sich überlappender Folienabschnitte auf der durchgebogenen Oberseite eines Gutstapels ermöglicht.

Diese Aufgabe wird dadurch gelöst, dass der Schweißbalken während des Verschweißens der überlappenden Folienabschnitte auf der Oberfläche des oberen Folienabschnittes der beiden sich überlappenden und miteinander zu verschweißenden Folienabschnitte abgerollt wird. Durch das Abrollen ist die Schweißfläche mit jedem Teilbereich einmal mit dem oberen Folienabschnitt in Kontakt, so dass auf diese Weise auf der ganzen Länge der von der Schweißfläche bewirkten Verschweißung eine gleichmäßige Versiegelung erzielt wird. Sofern die Krümmung der Schweißfläche gleich dem Verlauf der Durchbiegung ist, ist die Schweißfläche auf ihrer kompletten Länge mit dem oberen Folienabschnitt in Kontakt. Ist die Krümmung der Schweißfläche stärker als der Verlauf der Durchbiegung, ist die Schweißfläche bei der Abrollbewegung mit einem Teilbereich mit dem oberen Folienabschnitt in Kontakt. Durch die Abrollbewegung wird eine gleichmäßige Versiegelung erreicht, da die Schweißfläche die Kontur der Oberseite des Gutstapels "abfährt". Ferner kann der Schweißbalken auch zu einer Versiegelung bei einer eben ausgebildeten Oberseite eines Gutstapels eingesetzt werden.

Zunächst wird auf die Oberseite des Gutstapels manuell oder maschinell die Deckblattfolie aufgelegt und anschließend manuell oder maschinell die Folienbanderole angebracht und der Überstand der Folienbanderole manuell oder maschinell auf die auf der Oberseite der Gutstapels befindliche Deckblattfolie umgelegt. Für das anschließende Schweißen wird entweder der Gutstapel unter den (die) ortsfest angeordneten Schweißbalken, beispielsweise mittels eines Förderbandes, gefahren oder der (die) Schweißbalken über den ortsfest angeordneten Gutstapel verlagert. Daran schließt sich das erfindungsgemäße Verfahren an.

Der Schweißbalken kann zwei gegenüberliegende Enden aufweisen und der Schweißbalken kann zunächst mit seinem einen Ende mit der Oberfläche des oberen Folienabschnittes der beiden sich überlappenden und miteinander zu verschweißenden Folienabschnitte in Kontakt gebracht und anschließend der Schweißbalken zum Verschweißen auf der Oberfläche zu seinem anderen gegenüberliegenden Ende abgerollt werden. Bei einer solchen Verfahrensvariante ist jeder Abschnitt der Schweißfläche beim Abrollen einmal mit dem Folienabschnitt in Kontakt, so dass eine gleichmäßige Versiegelung erzielt wird.

Alternativ kann der Schweißbalken zwei gegenüberliegende Enden aufweisen und der Schweißbalken kann zuerst mit seinem tiefsten Punkt°P mit der Oberfläche des oberen Folienabschnittes der beiden sich überlappenden und miteinander zu verschweißenden Folienabschnitte in Kontakt gebracht und anschließend der Schweißbalken zum Verschweißen auf der Oberfläche zu seinem einen Ende und dann zu seinem gegenüberliegenden Ende abgerollt werden. Bei dieser Verfahrensvariante ist die Schweißfläche mit ihrem Teilbereich, der sich zwischen dem einen Ende und dem tiefsten Punkt P erstreckt, zweimal mit dem Folienabschnitt in Kontakt, während die Schweißfläche mit ihrem anderen Teilbereich, der sich zwischen dem tiefsten Punkt P und dem anderen Ende erstreckt, nur einmal mit dem Folienabschnitt in Kontakt ist. Zur Gewährleistung einer gleichbleibenden Versiegelung bietet es sich an, den Schweißbalken nach der Rollbewegung von dem tiefsten Punkt P in Richtung des gegenüberliegenden Endes wieder zu seinem tiefsten Punkt P zurückzurollen.

Zur Erzeugung einer Verschweißung in einem Bereich, der länger als die Länge der Schweißfläche des Schweißbalkens ist, kann zumindest ein weiterer Schweißbalken verwendet werden, wobei die Schweißbalken miteinander fluchtend und nebeneinander mit einem geringen Abstand zueinander angeordnet sind. Unter gering wird ein Abstand zwischen 10 mm bis 80 mm verstanden. Die Schweißbalken werden vorzugsweise gleichzeitig vertikal abgesenkt und angehoben. Auch rollen die Schweißbalken vorzugsweise gleichzeitig auf der Oberfläche des oberen Folienabschnittes der beiden sich überlappenden und miteinander zu verschweißenden Folienabschnitte ab. Bei dieser Verfahrensvariante ist die Verschweißung auf der ganzen Schweißlänge beendet, wenn die Schweißbalken aus ihrer Schweißposition in ihre Ruheposition verlagert werden.

Zur Erzeugung einer Verschweißung in einem Bereich, der länger als die Länge der Schweißfläche des Schweißbalkens ist, kann zumindest ein weiterer Schweißbalken verwendet werden, wobei die Schweißbalken nebeneinander mit einer geringen Überlappung, jedoch hintereinander gering versetzt zueinander angeordnet sind. Unter gering wird eine Überlappung von 10 mm bis 100 mm verstanden.

Die Schweißbalken können in der gleichen Richtung auf der Oberfläche des oberen Folienabschnittes der beiden sich überlappenden und miteinander zu verschweißenden Folienabschnitte abgerollt werden. Es ist aber auch eine entgegengesetzte Abrollbewegung möglich. Auch ist es möglich, dass die Schweißbalken in zwei oder mehrere Gruppen aufgeteilt sind, wobei die Schweißbalken innerhalb einer Gruppe in die gleiche Richtung abrollen, während die Rollbewegung zwischen den Gruppen entgegengesetzt ist.

Das Abrollen der Schweißbalken kann gleichzeitig erfolgen.

Zur Erzeugung einer Verschweißung in einem Bereich, der länger als die Länge der Schweißfläche des Schweißbalkens ist, kann der Schweißbalken nach dem Abrollen auf der Oberfläche des oberen Folienabschnittes der beiden sich überlappenden und miteinander zu verschweißenden Folienabschnitte aus seiner Schweißposition zumindest etwas angehoben, vorzugsweise in seine Ruheposition zurückverlagert, werden, anschließend kann eine Relativbewegung zwischen dem Schweißbalken und dem Gutstapel, vorzugsweise eine Verlagerung des Schweißbalkens bei feststehendem Gutstapel in horizontaler Richtung, erfolgen und dann kann der Schweißbalken durch erneutes Aufsetzen zum Verschweißen eines nächsten Abschnittes in seine Schweißposition verlagert werden. Bei dieser Verfahrensvariante erfolgt die Verschweißung "Stück für Stück" durch mehrmaliges Aufsetzen auf die Oberfläche des oberen Folienabschnittes der beiden sich überlappenden und miteinander zu verschweißenden Folienabschnitte. Ist die gewünschte einzubringende Schweißnaht beispielsweise 5 m lang und beträgt die Länge der Schweißfläche lediglich 1,5 m, muss der Schweißbalken insgesamt viermal aufgesetzt und zwischen den vier Aufsetzvorgängen dreimal horizontal verschoben werden.

Der Schweißbalken kann nach jedem Aufsetzen auf der Oberfläche des oberen Folienabschnittes der beiden sich überlappenden und miteinander zu verschweißenden Folienabschnitte in die gleiche Richtung abgerollt werden. Damit erfolgt ein Aufsetzen auf der obersten Lage der übereinanderliegenden und zu verschweißenden Teilbereiche der Folienabschnitte. Das Abrollen erfolgt dann nach jedem Aufsetzen in gleicher Weise, d. h. es erfolgt ein Abrollen in die gleiche Richtung.

Alternativ kann der Schweißbalken nach jedem Aufsetzen in die entgegengesetzte Richtung auf der Oberfläche des oberen Folienabschnittes der beiden sich überlappenden und miteinander zu verschweißenden Folienabschnitte abgerollt werden.

Die Erfindung betrifft eine Vorrichtung zum Verschweißen zweier sich überlappender und auf der Oberseite eines Gutstapels befindlicher Folienabschnitte zum Bilden einer Umhüllung, wobei die Vorrichtung einen Schweißbalken aufweist, der eine konvex gekrümmt ausgebildete Schweißfläche aufweist, und wobei dem Schweißbalken zur Verlagerung aus seiner Ruhestellung, in welcher der Schweißbalken in einem Abstand zu den zu verschweißenden Folienabschnitten angeordnet ist, in Richtung der Oberseite des Gutstapels in seine Schweißposition, in der der Schweißbalken mit dem oberen Folienabschnitt der beiden sich überlappenden und miteinander zu verschweißenden Folienabschnitte in Kontakt ist, zumindest zwei Verlagerungseinrichtungen zugeordnet sind.

Bei der Schweißfläche kann es sich beispielsweise um einen Schweißdraht handeln. Die Schweißfläche kann sehr dünn ausgebildet sein. Die Verlagerungseinrichtungen bewirken nicht nur eine Verlagerung aus der Ruhestellung in die Schweißposition, sondern bewirken auch nach dem Schweißvorgang ein Anheben des Schweißbalkens, vorzugsweise eine Verlagerung des Schweißbalkens aus seiner Schweißposition zurück in seine Ruhestellung.

In der Praxis können Gutstapel nicht unbeachtliche Abmessungen aufweisen. So kann beispielsweise ein aus Gipskartonplatten bestehender Gutstapel eine Länge von mehr als 5 m und eine Breite von mehr als 2 m aufweisen. Aufgrund der Abmessungen ist ein Umhüllen mit einer Haube nicht möglich, da bei einer Haube entsprechende Öffnungsmaße schwer realisierbar sind. Daher wird auf die Oberseite des Gutstapels eine Deckblattfolie aufgelegt und anschließend eine Folienbanderole um den Gutstapel herumgelegt. Die Folienbanderole ist so um den Gutstapel herum gelegt, dass die Folienbanderole unter Bildung eines Überstandes oberseitig übersteht. Der Überstand wird dann auf die Deckblattfolie umgelegt. Um eine hinreichende Wasserdichtigkeit zu gewährleisten, wird anschließend der Überstand der Folienbanderole und die Deckblattfolie mittels absenkbarer Schweißbalken verschweißt. Die Schweißbalken werden von oben auf die zu verschweißenden Folienabschnitte abgesenkt, bis die Schweißbalken mit ihrer Schweißfläche in Kontakt mit dem oberen Folienabschnitt sind. Als nachteilig erweist sich, dass die Oberseite des Gutstapels aufgrund der großen Abmessungen durchbiegt. Es ist aber auch durchaus möglich, dass die Oberseite des Gutstapels beispielsweise in der Mitte nach oben gewölbt ausgebildet ist. Dies hat zur Folge, dass sowohl bei einer durchgebogenen, als auch bei einer nach oben gewölbten Oberseite des Gutstapels der Schweißbalken nicht auf seiner ganzen Länge seiner Schweißfläche, sondern nur mit seinen beiden Enden, auf dem Folienabschnitt aufliegt, so dass insoweit entlang der Schweißfläche eine gleichmäßige Versiegelung nicht an jedem Punkt möglich ist.

Aufgabe der Erfindung ist es, die vorgenannten Nachteile zu vermeiden und eine Vorrichtung anzugeben, die eine bessere Versiegelung zweier sich überlappender Folienabschnitte auf der durchgebogenen Oberseite eines Gutstapels ermöglicht.

Diese Aufgabe wird dadurch gelöst, dass die Vorrichtung ferner eine Steuerung für die Verlagerungseinrichtungen umfasst, die derart eingerichtet ist, dass die Verlagerungseinrichtungen des Schweißbalkens unabhängig voneinander steuerbar sind, so dass der Schweißbalken während des Verschweißens der überlappenden Folienabschnitte auf der Oberfläche des oberen Folienabschnittes der beiden sich überlappenden und miteinander zu verschweißenden Folienabschnitte abrollbar ist. Die Steuerung erlaubt, dass die Verlagerungseinrichtungen des Schweißbalkens unabhängig voneinander steuerbar sind. Damit ist eine Abrollbewegung der Schweißfläche auf einer ebenen und auch auf einer durchgebogenen Oberseite eines Gutstapels möglich. Durch das dadurch erzielte Abrollen ist die Schweißfläche mit jedem Teilbereich einmal mit dem oberen Folienabschnitt in Kontakt, so dass auf diese Weise auf der ganzen Länge der von der Schweißfläche bewirkten Verschweißung eine gleichmäßige Versiegelung erzielt wird. Sofern die Krümmung der Schweißfläche gleich dem Verlauf der Durchbiegung ist, ist die Schweißfläche auf ihrer kompletten Länge mit dem oberen Folienabschnitt in Kontakt. Ist die Krümmung der Schweißfläche stärker als der Verlauf der Durchbiegung, ist die Schweißfläche bei der Abrollbewegung mit einem Teilbereich mit dem oberen Folienabschnitt in Kontakt. Durch die Abrollbewegung wird eine gleichmäßige Versiegelung erreicht, da die Schweißfläche die durchgebogene Kontur der Oberseite des Gutstapels "abfährt". Ferner kann der Schweißbalken auch zu einer Versiegelung bei einer eben ausgebildeten Oberseite eines Gutstapels eingesetzt werden.

Der tiefste Punkt P der konvex gekrümmt ausgebildeten Schweißfläche kann bezogen auf die Länge der Schweißfläche gesehen mittig angeordnet sein.

Dabei kann die konvex gekrümmt ausgebildete Schweißfläche auf einem Kreisbahnabschnitt liegen. Bei einer solchen Ausgestaltung hat die gekrümmt ausgebildete Schweißfläche einen konstanten Radius. Der Radius der konvex gekrümmt ausgebildeten Schweißfläche ist gleich oder kleiner dem Radius der Durchbiegung der Oberseite des Gutstapels.

Die Länge der Schweißfläche kann zwischen 100 cm und 300 cm, vorzugsweise zwischen 140 cm und 260 cm, betragen.

Der Schweißbalken kann zwei gegenüberliegende Enden aufweisen und in seiner Ruhestellung derart ausgerichtet sein, dass die beiden Enden auf einer Höhe liegen und sich die Krümmung zwischen diesen beiden Enden abwärts erstreckt und dass der Abstand A zwischen einer die beiden gegenüberliegenden Enden der Schweißfläche in der Ruhestellung verbindenden Geraden G einerseits und dem tiefsten Punkt P andererseits zwischen 5 mm und 80 mm, vorzugsweise zwischen 10 mm und 50 mm, beträgt.

Zumindest eine Verlagerungseinrichtung kann als Zylinder ausgebildet sein.

Zumindest ein Zylinder kann als Pneumatikzylinder ausgebildet sein.

Alternativ kann zumindest ein Zylinder als Hydraulikzylinder ausgebildet sein.

Zumindest eine Verlagerungseinrichtung kann als Zahnstange ausgebildet sein. Selbstverständlich sind noch andere Ausgestaltungen möglich. So ist beispielsweise auch eine als Riemen oder als Kette ausgebildete Verlagerungseinrichtung möglich, der (die) von einem Antrieb angetrieben wird.

Zumindest eine Verlagerungseinrichtung kann als elektrischer Antrieb ausgebildet sein. Der elektrische Antrieb kann beispielsweise als Lineareinheit oder als Exzenterantrieb ausgebildet sein. Selbstverständlich sind auch andere Ausgestaltungen von elektrischen Antrieben möglich.

Im Folgenden werden in den Zeichnungen dargestellte Ausführungsbeispiele der Erfindung erläutert. Es zeigen:
- Fig. 1: eine Seitenansicht auf den oberen Bereich eines mit einer Deckblattfolie bedeckten und mit einer Folienbanderole umhüllten Gutstapels,
- Fig. 2: eine Draufsicht auf einen mit einer Deckblattfolie bedeckten und mit einer Folienbanderole umhüllten Gutstapel,
- Fig. 3a: den Gegenstand nach Fig. 2,
- Fig. 3b: den Gegenstand nach Fig. 1,
- Fig. 3c - i: Seitenansichten auf den oberen Bereich eines mit einer Deckblattfolie bedeckten und mit einer Folienbanderole umhüllten Gutstapels sowie einem Schweißbalken in unterschiedlichen Positionen sowie
- Fig. 4-10: die Fig. 3c - i in einem vergrößerten Maßstab.

In allen Figuren werden für gleiche bzw. gleichartige Bauteile übereinstimmende Bezugszeichen verwendet.

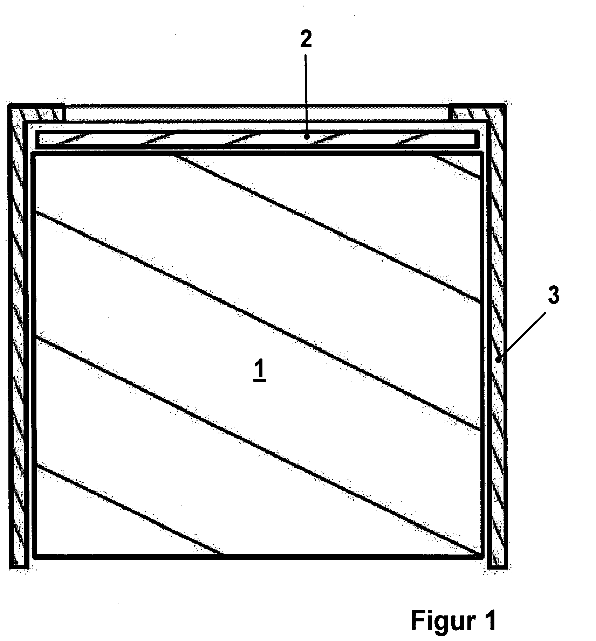

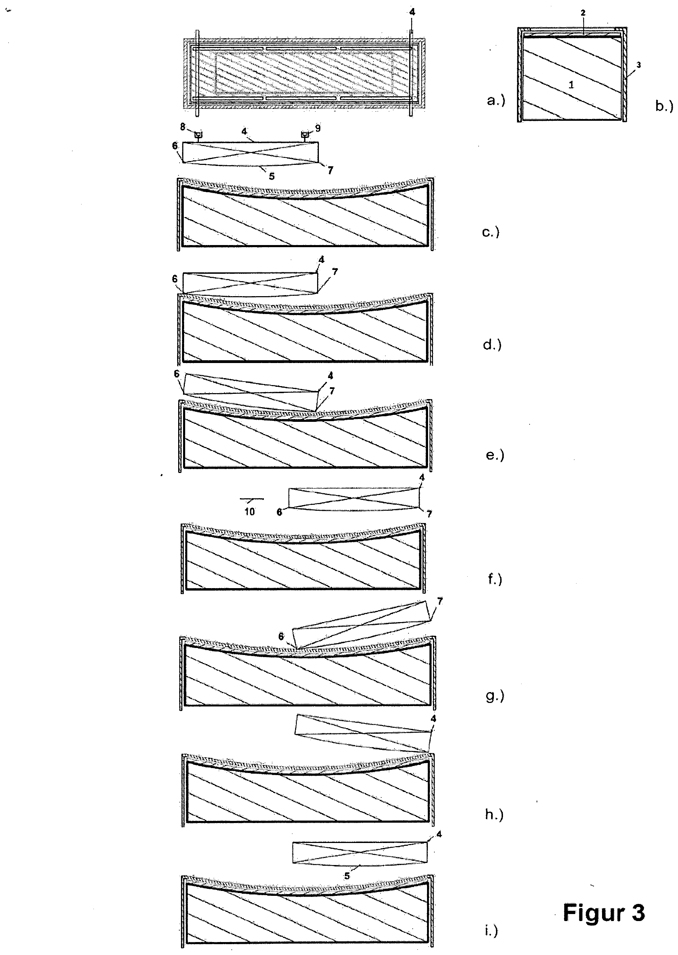

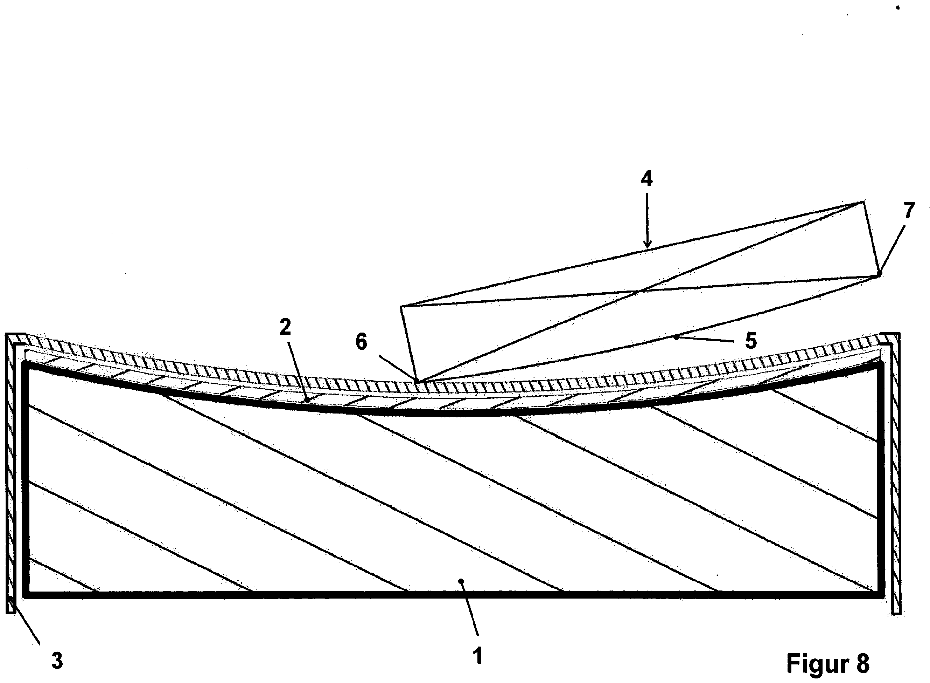

Fig. 1 zeigt einen Gutstapel 1, auf dessen Oberseite eine Deckblattfolie 2 gelegt ist. Bei dem Gutstapel 1 kann es sich beispielsweise um gestapelte Gipskartonplatten handeln. Aufgrund der Abmessungen und des Gewichtes der Gipskartonplatten bildet der Gutstapel 1, insbesondere parallel zur Längsseite des Gutstapels 1 gesehen, eine Durchbiegung. Daher ist, wie den Fig. 3 bis 10 zu entnehmen ist, die Oberseite des Gutstapels 1 durchgebogen dargestellt.

In dem dargestellten Ausführungsbeispiel ist die Deckblattfolie 2 etwas kleiner als die Oberseite des Gutstapels 1. Es ist aber auch durchaus möglich, dass die Deckblattfolie 2 größer als die Oberseite des Gutstapels 1 ist. Bei einer solchen Ausgestaltung ist dann der Rand der Deckblattfolie 2 nach unten umgefaltet.

Die Seiten des Gutstapels 1 sind mit einer Folienbanderole 3 umhüllt, wobei die Folienbanderole 3 unter Bildung eines Überstandes oberseitig über die Oberseite des Gutstapels 1 übersteht. Der Überstand ist auf die Oberseite des Gutstapels 1 umgefaltet. Aus Gründen der Übersichtlichkeit sind in allen Figuren die Folienbanderole 3 und die Deckblattfolie 2 deutlich dicker und auch in einem Abstand zueinander dargestellt.

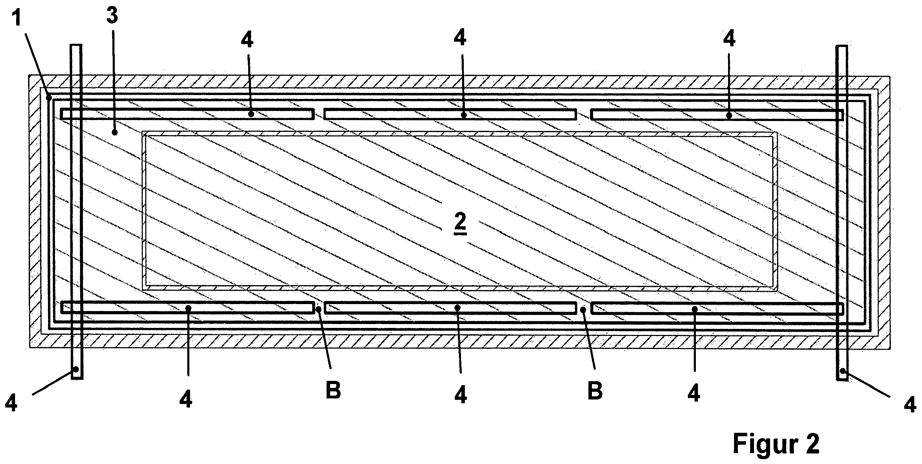

Fig. 2 zeigt eine Draufsicht auf den umhüllten Gutstapel 1. Wie Fig. 2 zu entnehmen ist, sind die beiden gegenüberliegenden Längsseiten des Gutstapels 1 deutlich länger als die beiden gegenüberliegenden kurzen Seiten.

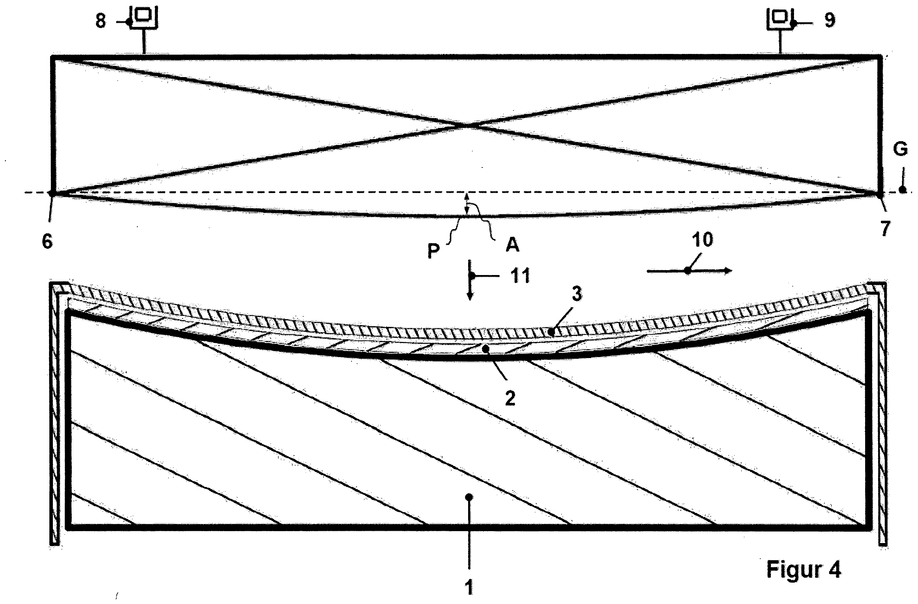

Wie anhand der Fig. 4 bis 10 noch erläutert werden wird, wird die als Folienabschnitt ausgebildete Folienbanderole 3 mit der als Folienabschnitt ausgebildeten Deckblattfolie 2 entlang der beiden Längsseiten und entlang der beiden kurzen Seiten des Gutstapels 1 verschweißt. Bei der in Fig. 2 dargestellten Anordnung sind vorzugsweise entlang jeder der beiden Längsseiten des Gutstapels 1 jeweils insgesamt drei Schweißbalken 4 vorgesehen. Dann können die Verschweißungen an den beiden Längsseiten gleichzeitig durchgeführt werden.

Zur anschließenden oder vorherigen Verschweißung im Bereich der beiden kurzen Kanten des Gutstapels 1 ist zumindest ein weiterer Schweißbalken 4 vorgesehen, der orthogonal zu den die Längsseiten des Gutstapels 1 verschweißenden Schweißbalken 4 ausgerichtet ist. Sofern nur ein Schweißbalken 4 zur Durchführung der Verschweißung im Bereich der kurzen Kanten vorgesehen ist, wird der Gutstapel 1 beispielsweise mittels eines nicht dargestellten Förderbands so weit weitergefördert, dass mit dem Schweißbalken 4 anschließend die Verschweißung entlang der gegenüberliegenden kurzen Kanten erfolgen kann.

Wie beispielsweise Fig. 4 zu entnehmen ist, weist der Schweißbalken 4 eine konvex gekrümmt ausgebildete Schweißfläche 5 auf. Die Krümmung der Schweißfläche 5 ist dabei stärker als der Verlauf der Durchbiegung in der Oberseite des Gutstapels 1. Vorliegend liegt die konvex gekrümmt ausgebildete Schweißfläche 5 auf einem Kreisbahnabschnitt, da der Radius der Krümmung der Schweißfläche 5 konstant ist. Der Radius der konvex gekrümmt ausgebildeten Schweißfläche 5 ist, wie den Figuren zu entnehmen ist, deutlich kleiner als der Radius der Durchbiegung der Oberseite des Gutstapels 1. Zum Verschweißen wird der Schweißbalken 4 aus seiner Ruhestellung, so wie sie in Fig. 4 dargestellt ist, in welcher der Schweißbalken 4 in einem Abstand zu den zu verschweißenden Folienabschnitten angeordnet ist, in Richtung der Oberseite des Gutstapels 1 in seine Schweißposition bewegt, damit der Schweißbalken 4 mit seiner Schweißfläche 5 in Kontakt mit dem oberen Folienabschnitt der beiden sich überlappenden und miteinander zu verschweißenden Folienabschnitt in Kontakt gebracht werden kann.

Der Schweißbalken 4 weist zwei gegenüberliegende Enden 6, 7 auf. Der tiefste Punkt P der konvex gekrümmt ausgebildeten Schweißfläche 5 ist bei diesem Ausführungsbeispiel bezogen auf die Länge der Schweißfläche 5 gesehen mittig angeordnet.

Im Bereich jedes der beiden Enden 6, 7 greift eine Verlagerungseinrichtung 8, 9 an, die in dem dargestellten Beispiel als Zylinder ausgebildet ist. Aus Gründen der Übersichtlichkeit sind nur in Fig. 3c und 4 die Verlagerungseinrichtungen 8, 9 angedeutet. Nicht dargestellt sind in allen Figuren die anderen Bauteile der Vorrichtung, wie beispielweise die Haltekonstruktion, an denen die beiden Verlagerungseinrichtungen 8, 9 befestigt sind. Bei der Haltekonstruktion kann es sich beispielsweise um ein Tor handeln, durch das ein Förderband geführt ist, auf dem die Gutstapel 1 transportiert werden. Auf die Oberseite des Gutstapels 1 ist in einer vorausgegangenen Vorrichtung die Deckblattfolie 2 aufgelegt, die Folienbanderole 3 angebracht und der Überstand der Folienbanderole 3 umgelegt worden.

Die Vorrichtung, die u. a. die Verlagerungseinrichtungen 8, 9 sowie den (die) Schweißbalken 4 umfasst, weist auch eine nicht dargestellte Steuerung für die Verlagerungseinrichtungen 8, 9 jedes Schweißbalkens 4 auf. Die Steuerung ist derart eingerichtet, dass die Verlagerungseinrichtungen 8, 9 jedes Schweißbalkens 4 unabhängig voneinander steuerbar sind, so dass der Schweißbalken 4 während des Verschweißens der überlappenden Folienabschnitte auf der Oberfläche des oberen Folienabschnittes der beiden sich überlappenden und miteinander zu verschweißenden Folienabschnitte abrollbar ist, so wie es in den Figuren dargestellt ist.

In den Fig. 3c bis i, die im vergrößerten Maßstab auch in den Fig. 4 bis 10 dargestellt sind, ist der Ablauf des Verschweißens dargestellt. Bei dem dargestellten Ablauf wird zur Erzeugung der Verschweißung in einem Bereich, der länger ist als die Länge der Schweißfläche 5 des Schweißbalkens 4, der Schweißbalken 4 nach dem Abrollen auf der Oberfläche des oberen Folienabschnittes der beiden sich überlappenden und miteinander zu verschweißenden Folienabschnitte aus seiner Schweißposition wieder angehoben, anschließend horizontal in Richtung des Pfeils 10 verlagert und dann durch erneutes Aufsetzen zum Verschweißen eines nächsten Abschnittes in seine Schweißposition verlagert.

In der in Fig. 4 dargestellten Position ist der Schweißbalken 4 in seiner Ruhestellung. Die beiden gegenüberliegenden Enden 6, 7 sind derart ausgerichtet, dass die beiden Enden 6, 7 auf einer Höhe liegen und sich die Krümmung zwischen diesen beiden Enden 6, 7 abwärts erstreckt. Gestrichelt dargestellt ist eine Gerade G, die die beiden gegenüberliegenden Enden 6, 7 der Schweißfläche 5 in der Ruhestellung verbindet. Der Abstand zwischen der Geraden G und dem tiefsten Punkt P beträgt bei einer Länge der Schweißfläche 5 von rund 150 cm vorzugsweise etwa 10 mm.

Die in den Fig. 4 bis 10 dargestellten Positionen zeigen den Ablauf der Verschweißung im Bereich einer Längsseite des Gutstapels 1, d. h. in einem Bereich, der länger ist als die Länge der Schweißfläche 5 des Schweißbalkens 4. Daher wird der Schweißbalken 4 nach dem Abrollen auf der Oberfläche des oberen Folienabschnittes der beiden sich überlappenden und miteinander zu verschweißenden Folienabschnitte aus seiner Schweißposition wieder angehoben, anschließend horizontal in Richtung des Pfeils 10 verlagert und anschließend durch erneutes Aufsetzen zum Verschweißen eines nächsten Abschnittes in seine Schweißposition verlagert.

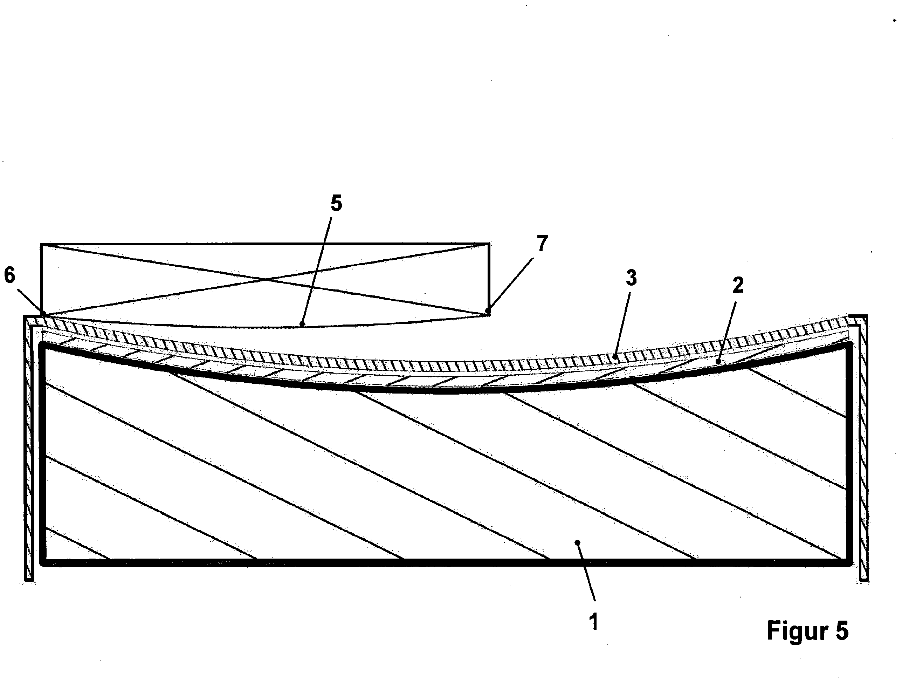

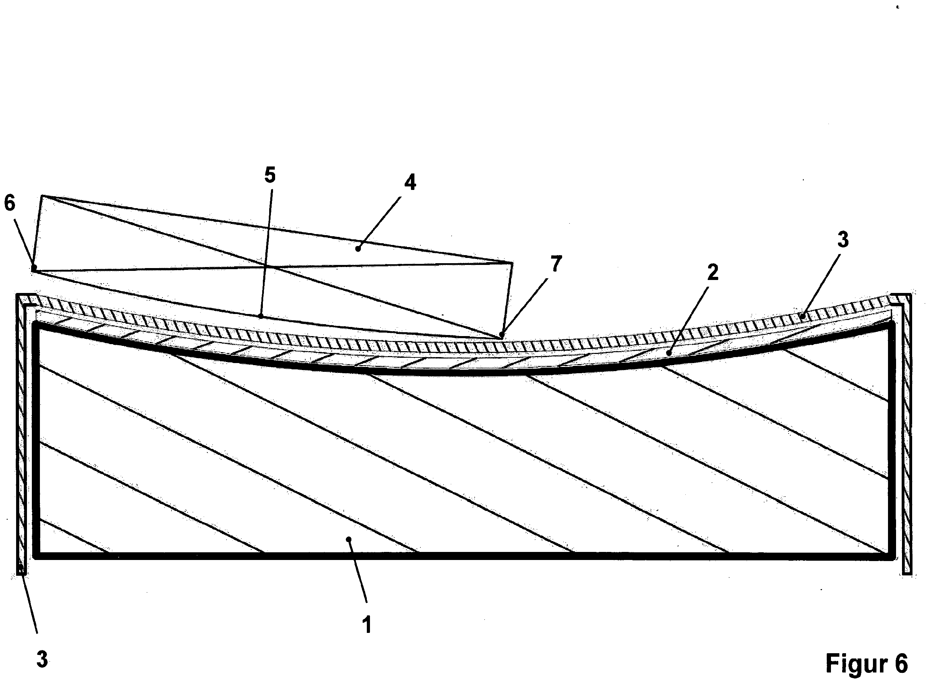

Fig. 4 zeigt den Schweißbalken 4 in der Ruhestellung. Zum Verschweißen wird der Schweißbalken 4 in Richtung des Pfeils 11 abgesenkt. In der in Fig. 5 dargestellten Position kommt der Schweißbalken 4 mit seinem linken Ende 6 in Kontakt mit dem oberen Folienabschnitt der beiden sich überlappenden und miteinander zu verschweißenden Folienabschnitte. Nachdem der Schweißbalken 4 in Kontakt mit dem oberen Folienabschnitt ist, beginnt die Verschwei-ßung, wobei der Schweißbalken 4 zum Verschweißen auf der Oberfläche zu seinem anderen gegenüberliegenden, nämlich dem rechten Ende 7 abgerollt wird. Diese Abrollbewegung wird durch die unabhängig voneinander von der Steuerung steuerbaren Verlagerungseinrichtungen 8, 9 des Schweißbalkens 4 ermöglicht. Das Abrollen ist in Fig. 6 dargestellt. Als Ergebnis des bisherigen Schweißvorganges sind der Überstand der Folienbanderole 3 und die Deckblattfolie 2 über eine Länge von etwas mehr als die Hälfte der Längsseite des Gutstapels 1 verschweißt.

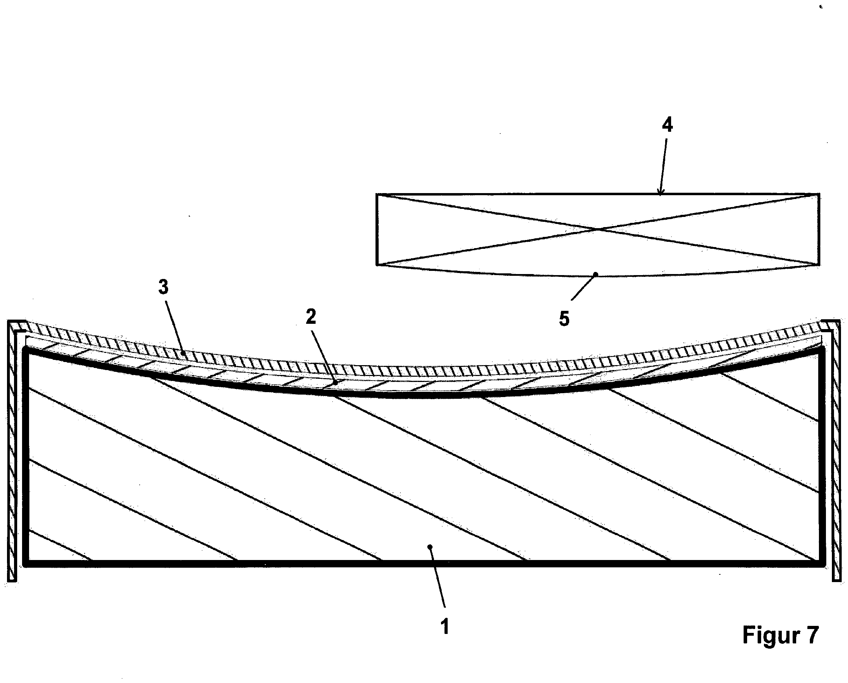

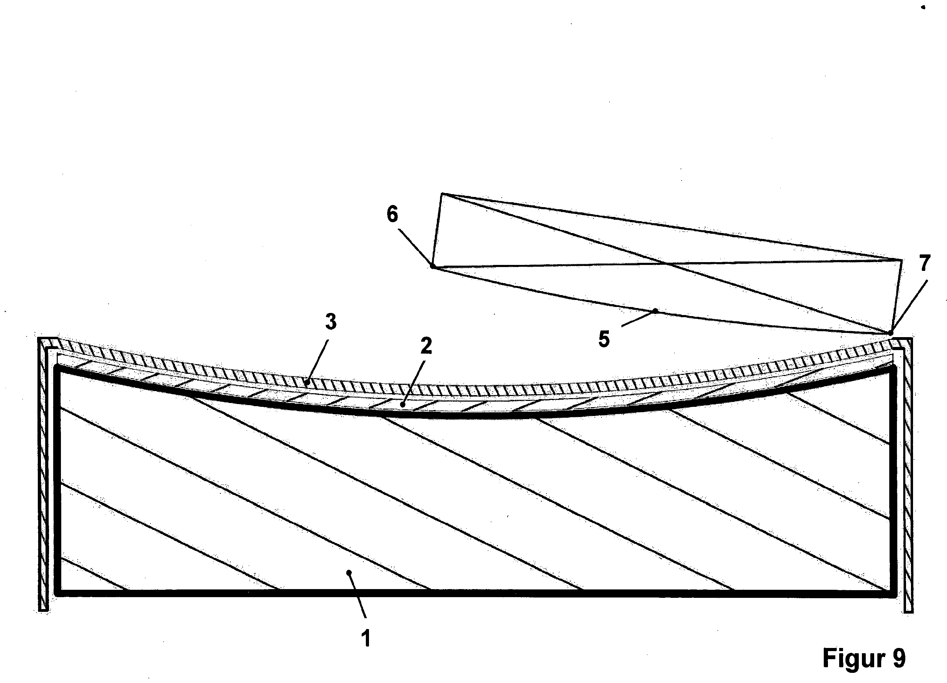

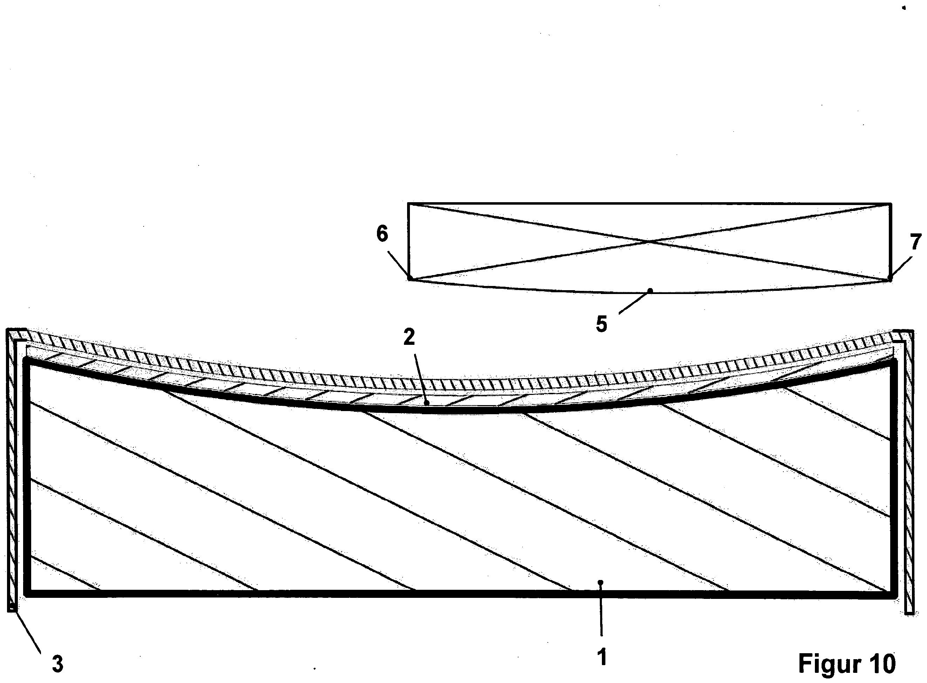

Anschließend wird der Schweißbalken 4 wieder angehoben und horizontal in Richtung des Pfeils 10 verlagert. Die in Fig. 7 dargestellte Ruheposition ergibt sich nach dem Anheben und der horizontalen Verlagerung in Richtung des Pfeils 10. Anschließend wird der Schweißbalken 4 wieder soweit abgesetzt, dass der Schweißbalken 4 mit seinem linken Ende 6 mit dem oberen Folienabschnitt der beiden sich überlappenden miteinander zu verschweißenden Folienabschnitte in Kontakt kommt. Während der Aktivierung der Schweißfläche 5 wird anschließend durch die Steuerung der Verlagerungseinrichtungen 8, 9 der Schweißbalken 4 zum Verschweißen auf der Oberfläche zu seinem anderen gegenüberliegenden, nämlich dem rechten Ende 7 in die in Fig. 9 dargestellte Position abgerollt. Anschließend wird der Schweißbalken 4 in die in Fig. 10 dargestellte Position angehoben.

Durch das zweimalige Aufsetzen des Schweißbalkens 4 ist der Überstand der Folienbanderole 3 mit der Deckblattfolie 2 entlang einer Längsseite des Gutstapels 1 verschweißt. Vorzugsweise ist auf beiden Längsseiten des Gutstapels 1 je ein Schweißbalken 4 angeordnet, so dass die Verschweißung entlang der beiden Längsseiten gleichzeitig durchgeführt werden kann. Durch das Abrollen des Schweißbalkens 4 kann trotz der Durchbiegung der Oberseite des Gutstapels 1 an jeder Stelle der eingebrachten Schweißnaht eine gleichmäßige Versiegelung erzielt werden. Für das Verschweißen entlang einer kurzen Kante kann ebenfalls ein vorbeschriebener, eine gekrümmte Schweißfläche 5 aufweisender, Schweißbalken 4 vorgesehen sein, der mittels der Steuerung auf der Oberseite des Gutstapels 1 abrollbar ist. Ist der Gutstapel 1 schmal und weist der Gutstapel 1 parallel zu seinen kurzen Kanten gesehen keine durchgebogene Oberfläche auf, kann für das Verschweißen entlang einer kurzen Kante auch ein herkömmlicher Schweißbalken 4 mit einer geraden Schweißfläche 5, der horizontal absenkbar ist, verwendet werden.

Bei dem in Fig. 2 dargestellten Ausführungsbeispiel sind an jeder Längsseite des Gutstapels 1 drei Schweißbalken 4 vorgesehen, wobei die Schweißbalken 4 in dem dargestellten Beispiel miteinander fluchten und nebeneinander mit einem geringen Abstand B zueinander angeordnet sind. Bei einer solchen Anordnung bietet es sich an, wenn das Abrollen der Schweißbalken 4 gleichzeitig erfolgt und wenn die Schweißbalken 4 in der gleichen Richtung auf der Oberfläche des oberen Folienabschnittes der beiden sich überlappenden und miteinander zu verschweißenden Folienabschnitte abgerollt werden.

## Patentansprüche

1. Verfahren zum Verschweißen zweier sich überlappender und auf der Oberseite eines Gutstapels (1) befindlicher Folienabschnitte zum Bilden einer Umhüllung, wobei das Verschweißen mittels eines Schweißbalkens (4) erfolgt und wobei der Schweißbalken (4) eine konvex gekrümmt ausgebildete Schweißfläche (5) aufweist und wobei zum Verschweißen der Schweißbalken (4) aus seiner Ruhestellung, in welcher der Schweißbalken (4) in einem Abstand zu den zu verschweißenden Folienabschnitten angeordnet ist, in Richtung (Pfeil 11) der Oberseite des Gutstapels (1) in seine Schweißposition bewegt und mit dem oberen Folienabschnitt der beiden sich überlappenden und miteinander zu verschweißenden Folienabschnitte in Kontakt gebracht wird, **dadurch gekennzeichnet, dass** der Schweißbalken (4) während des Verschweißens der überlappenden Folienabschnitte auf der Oberfläche des oberen Folienabschnittes der beiden sich überlappenden und miteinander zu verschweißenden Folienabschnitte abgerollt wird.

2. Verfahren nach dem vorhergehenden Anspruch, **dadurch gekennzeichnet, dass** der Schweißbalken (4) zwei gegenüberliegende Enden (6, 7) aufweist und dass der Schweißbalken (4) zunächst mit seinem einen Ende (6 bzw. 7) mit der Oberfläche des oberen Folienabschnittes der beiden sich überlappenden und miteinander zu verschweißenden Folienabschnitte in Kontakt gebracht und dass anschließend der Schweißbalken (4) zum Verschweißen auf der Oberfläche zu seinem anderen gegenüberliegenden Ende (7 bzw. 6) abgerollt wird.

3. Verfahren nach Anspruch 1, **dadurch gekennzeichnet, dass** der Schweißbalken (4) zwei gegenüberliegende Enden (6, 7) aufweist und dass der Schweißbalken (4) zuerst mit seinem tiefsten Punkt°P mit der Oberfläche des oberen Folienabschnittes der beiden sich überlappenden und miteinander zu verschweißenden Folienabschnitte in Kontakt gebracht und dass anschließend der Schweißbalken (4) zum Verschweißen auf der Oberfläche zu seinem einen Ende (6 bzw. 7) und dann zu seinem gegenüberliegenden Ende (7 bzw. 6) abgerollt wird.

4. Verfahren nach einem der vorhergehenden Ansprüche, **dadurch gekennzeichnet, dass** zur Erzeugung einer Verschweißung in einem Bereich, der länger als die Länge der Schweißfläche (5) des Schweißbalkens (4) ist, zumindest ein weiterer Schweißbalken (4) verwendet wird, wobei die Schweißbalken (4) miteinander fluchtend und nebeneinander mit einem geringen Abstand B zueinander angeordnet sind.

5. Verfahren nach einem der Ansprüche 1 bis 3, **dadurch gekennzeichnet, dass** zur Erzeugung einer Verschweißung in einem Bereich, der länger als die Länge der Schweißfläche (5) des Schweißbalkens (4) ist, zumindest ein weiterer Schweißbalken (4) verwendet wird, wobei die Schweißbalken (4) nebeneinander mit einer geringen Überlappung, jedoch hintereinander gering versetzt zueinander angeordnet sind.

6. Verfahren nach einem der Ansprüche 4 oder 5, **dadurch gekennzeichnet, dass** die Schweißbalken (4) in der gleichen Richtung auf der Oberfläche des oberen Folienabschnittes der beiden sich überlappenden und miteinander zu verschweißenden Folienabschnitte abgerollt werden.

7. Verfahren nach dem vorhergehenden Anspruch, **dadurch gekennzeichnet, dass** das Abrollen der Schweißbalken (4) gleichzeitig erfolgt.

8. Verfahren nach einem der Ansprüche 1 bis 3, **dadurch gekennzeichnet, dass** zur Erzeugung einer Verschweißung in einem Bereich, der länger als die Länge der Schweißfläche (5) des Schweißbalkens (4) ist, der Schweißbalken (4) nach dem Abrollen auf der Oberfläche des oberen Folienabschnittes der beiden sich überlappenden und miteinander zu verschweißenden Folienabschnitte aus seiner Schweißposition zumindest etwas angehoben, vorzugsweise in seine Ruheposition zurückverlagert wird, anschließend eine Relativbewegung zwischen dem Schweißbalken (4) und dem Gutstapel (1), vorzugsweise eine Verlagerung des Schweißbalkens (4) bei feststehendem Gutstapel (1) in horizontaler Richtung (Pfeil 10), erfolgt und dann der Schweißbalken (4) durch erneutes Aufsetzen zum Verschweißen eines nächsten Abschnittes in seine Schweißposition verlagert wird.

9. Verfahren nach dem vorhergehenden Anspruch, **dadurch gekennzeichnet, dass** der Schweißbalken (4) nach jedem Aufsetzen in die gleiche Richtung auf der Oberfläche des oberen Folienabschnittes der beiden sich überlappenden und miteinander zu verschweißenden Folienabschnitte abgerollt wird.

10. Verfahren nach Anspruch 8, **dadurch gekennzeichnet, dass** der Schweißbalken (4) nach jedem Aufsetzen in die entgegengesetzte Richtung auf der Oberfläche des oberen Folienabschnittes der beiden sich überlappenden und miteinander zu verschweißenden Folienabschnitte abgerollt wird.

11. Vorrichtung zum Verschweißen zweier sich überlappender und auf der Oberseite eines Gutstapels (1) befindlicher Folienabschnitte zum Bilden einer Umhüllung, wobei die Vorrichtung einen Schweißbalken (4) aufweist, der eine konvex gekrümmt ausgebildete Schweißfläche (5) aufweist, und wobei dem Schweißbalken (4) zur Verlagerung aus seiner Ruhestellung, in welcher der Schweißbalken (4) in einem Abstand zu den zu verschweißenden Folienabschnitten angeordnet ist, in Richtung (Pfeil 11) der Oberseite des Gutstapels (1) in seine Schweißposition, in der der Schweißbalken (4) mit dem oberen Folienabschnitt der beiden sich überlappenden und miteinander zu verschweißenden Folienabschnitte in Kontakt ist, zumindest zwei Verlagerungseinrichtungen (8, 9) zugeordnet sind, insbesondere zur Durchführung des Verfahrens nach einem der vorhergehenden Ansprüche, wobei die Vorrichtung ferner eine Steuerung für die Verlagerungseinrichtungen (8, 9) umfasst, die derart eingerichtet ist, dass die Verlagerungseinrichtungen (8, 9) des Schweißbalkens (4) unabhängig voneinander steuerbar sind, so dass der Schweißbalken (4) während des Verschweißens der überlappenden Folienabschnitte auf der Oberfläche des oberen Folienabschnittes der beiden sich überlappenden und miteinander zu verschweißenden Folienabschnitte abrollbar ist.

12. Vorrichtung nach dem vorhergehenden Anspruch, **dadurch gekennzeichnet, dass** der tiefste Punkt P der konvex gekrümmt ausgebildeten Schweißfläche (5) bezogen auf die Länge der Schweißfläche (5) gesehen mittig angeordnet ist.

13. Vorrichtung nach dem vorhergehenden Anspruch, **dadurch gekennzeichnet, dass** die konvex gekrümmt ausgebildete Schweißfläche (5) auf einem Kreisbahnabschnitt liegt.

14. Vorrichtung nach einem der Ansprüche 11 bis 13, **dadurch gekennzeichnet, dass** die Länge der Schweißfläche (5) zwischen 100 cm und 300 cm, vorzugsweise zwischen 140 cm und 260 cm, beträgt.

15. Vorrichtung nach einem der Ansprüche 11 bis 14, **dadurch gekennzeichnet, dass** der Schweißbalken (4) zwei gegenüberliegende Enden (6, 7) aufweist und in seiner Ruhestellung derart ausgerichtet ist, dass die beiden Enden (6, 7) auf einer Höhe liegen und sich die Krümmung zwischen diesen beiden Enden (6, 7) abwärts erstreckt und dass der Abstand A zwischen einer, die beiden gegenüberliegenden Enden (6, 7) der Schweißfläche (5) in der Ruhestellung verbindenden, Geraden G einerseits und dem tiefsten Punkt P andererseits zwischen 5 mm und 80 mm, vorzugsweise zwischen 10 mm und 50 mm, beträgt.

16. Vorrichtung nach einem der Ansprüche 11 bis 15, **dadurch gekennzeichnet, dass** zumindest eine Verlagerungseinrichtung (8, 9) als Zylinder ausgebildet ist.

17. Vorrichtung nach dem vorhergehenden Anspruch, **dadurch gekennzeichnet, dass** zumindest ein Zylinder als Pneumatikzylinder ausgebildet ist.

18. Vorrichtung nach einem der Ansprüche 16 oder 17, **dadurch gekennzeichnet, dass** zumindest ein Zylinder als Hydraulikzylinder ausgebildet ist.

19. Vorrichtung nach einem der Ansprüche 11 bis 18, **dadurch gekennzeichnet, dass** zumindest eine Verlagerungseinrichtung (8, 9) als Zahnstange ausgebildet ist.

## Claims

1. Method for welding two overlapping film sections located on the top of a stack of goods (1) to form a wrapping, the welding being carried out by means of a welding bar (4) and the welding bar (4) comprising a convexly curved welding surface (5) and wherein for welding the welding bar (4) is moved from its rest position, in which the welding bar (4) is arranged at a distance from the film sections to be welded, in the direction (arrow 11) of the top of the stack of goods (1) into its welding position and is brought into contact with the upper film section of the two overlapping film sections to be welded together, **characterized in that** the welding bar (4) is, during the welding of the overlapping film sections, rolled on the surface of the upper film section of the two overlapping film sections to be welded together.

2. Method according to the preceding claim, **characterized in that** the welding bar (4) has two opposite ends (6, 7) and that one end (6 or 7) of the welding bar (4) is first brought into contact with the surface of the upper film section of the two overlapping film sections that are to be welded together and that the welding bar (4) is then rolled off on the surface to its other opposite end (7 or 6) for welding.

3. Method according to claim 1, **characterized in that** the welding bar (4) has two opposite ends (6, 7) and that the welding bar (4) with its lowest point °P is first brought into contact with the surface of the upper film section of the two overlapping film sections that are to be welded together and that the welding bar (4) is then rolled off on the surface to one end (6 or 7) and then to its opposite end (7 or 6) for welding.

4. Method according to one of the preceding claims, **characterized in that** to produce a weld in an area which is longer than the length of the welding surface (5) of the welding bar (4), at least one further welding bar (4) is used, the welding bars ( 4) aligned flush with each other and arranged next to each other with a small distance B from one another.

5. Method according to one of claims 1 to 3, **characterized in that** to produce a weld in an area which is longer than the length of the welding surface (5) of the welding bar (4), at least one further welding bar (4) is used, the welding bars (4) arranged next to each other with a slight overlap, but one slightly offset behind the other slightly offset.

6. Method according to one of claims 4 or 5, **characterized in that** the welding bars (4) are rolled in the same direction on the surface of the upper film section of the two overlapping film sections to be welded together.

7. Method according to the preceding claim, **characterized in that** the rolling of the welding bars (4) takes place simultaneously.

8. Method according to one of claims 1 to 3, **characterized in that** in order to produce a weld in an area which is longer than the length of the welding surface (5) of the welding bar (4), the welding bar (4) after rolling on the surface of the upper film section of the two overlapping film sections to be welded together is at least slightly raised from its welding position, preferably moved back to its rest position, then a relative movement is carried out between the welding bar (4) and the stack of goods (1), preferably a displacement of the welding bar (4) with fixed stack of goods (1) in horizontal direction (arrow 10), and then the welding bar (4) is moved into its welding position again to weld a further section.

9. Method according to the preceding claim, **characterized in that** the welding bar (4) is rolled after each placement in the same direction on the surface of the upper film section of the two overlapping film sections to be welded together.

10. Method according to claim 8, **characterized in that** the welding bar (4) is rolled after each placement in the opposite direction on the surface of the upper film section of the two overlapping film sections to be welded together.

11. Device for welding two overlapping film sections located on the top of a stack of goods (1) to form a wrapping, the device comprising a welding bar (4) which comprises a convexly curved welding surface (5), wherein at least two displacement devices (8, 9) are assigned to the welding bar (4) for moving from its rest position, in which the welding bar (4) is arranged at a distance from the film sections to be welded, in the direction (arrow 11) of the top of the stack of goods (1) into its welding position, in which the welding bar (4) is in contact with the upper film section of the two overlapping film sections to be welded together, in particular for carrying out the method according to one of the preceding claims, wherein the device further includes a control for the displacement devices (8, 9), which is set up in such a way that the displacement devices (8, 9) of the welding bar (4) can be controlled independently of one another, so that the welding bar (4) during welding of the overlapping film sections can be rolled on the surface of the upper film section of the two overlapping film sections that are to be welded together.

12. Device according to the preceding claim, **characterized in that** the lowest point P of the convexly curved welding surface (5) is arranged centrally relative to the length of the welding surface (5).

13. Device according to the preceding claim, **characterized in that** the convexly curved welding surface (5) lies on a section of a circular path.

14. Device according to one of claims 11 to 13, **characterized in that** the length of the welding surface (5) is between 100 cm and 300 cm, preferably between 140 cm and 260 cm.

15. Device according to one of claims 11 to 14, **characterized in that** the welding bar (4) has two opposite ends (6, 7) and is aligned in its rest position such that the two ends (6, 7) are aligned at the same height and such that the curvature between these two ends (6, 7) extends downwards and that the distance A between a straight line G connecting the two opposite ends (6, 7) of the welding surface (5) in the rest position on the one hand and the lowest point P on the other hand is between 5 mm and 80 mm, preferably between 10 mm and 50 mm.

16. Device according to one of claims 11 to 15, **characterized in that** at least one displacement device (8, 9) is designed as a cylinder.

17. Device according to the preceding claim, **characterized in that** at least one cylinder is designed as a pneumatic cylinder.

18. Device according to one of claims 16 or 17, **characterized in that** at least one cylinder is designed as a hydraulic cylinder.

19. Device according to one of claims 11 to 18, **characterized in that** at least one displacement device (8, 9) is designed as a toothed rack.

## Revendications

1. Procédé de soudage de deux sections de film superposées situées au sommet d'une pile de marchandises (1) pour former une enveloppe, le soudage étant effectué au moyen d'une barre de soudure (4) et la barre de soudure (4) comportant une surface de soudure (5) incurvée de manière convexe et dans lequel pour souder la barre de soudure (4) est déplacée à partir de sa position de repos, dans laquelle la barre de soudure (4) est disposée à distance des sections de film à souder, en direction (flèche 11) du sommet de la pile de marchandises (1) dans sa position de soudage et est mise en contact avec la section de film supérieure des deux sections de film superposées à souder, **caractérisé en ce que** la barre de soudure (4) est déroulée sur la surface de la section de film supérieure des deux sections de film superposées à souder ensemble lors du soudage des sections de film superposées.

2. Procédé selon la revendication précédente, **caractérisé en ce que** la barre de soudure (4) comprend deux extrémités opposées (6, 7) et que d'abord une extrémité (6 ou 7) de la barre de soudure (4) est mise en contact avec la surface de la section du film supérieure des deux sections de film superposées à souder et que la barre de soudure (4) est ensuite déroulée sur la surface jusqu'à son autre extrémité opposée (7 ou 6) pour souder.

3. Procédé selon la revendication 1, **caractérisé en ce que** la barre de soudure (4) comprend deux extrémités opposées (6, 7) et que d'abord le point le plus bas °P de la barre de soudure (4) est mise en contact avec la surface de la section du film supérieure des deux sections de film superposées à souder et que la barre de soudage (4) est ensuite déroulée vers une extrémité (6 ou 7) puis vers son extrémité opposée (7 ou 6) pour souder.

4. Procédé selon l'une des revendications précédentes, **caractérisé en ce que** pour réaliser une soudure dans une zone plus longue que la longueur de la surface de soudure (5) de la barre de soudure (4), au moins une autre barre de soudure (4) est utilisés, les barres de soudure (4) alignées affleurant les unes avec les autres et disposées les unes à côté de les autres avec une petite distance B.

5. Procédé selon l'une des revendications 1 à 3, **caractérisé en ce que** pour réaliser une soudure dans une zone plus longue que la longueur de la surface de soudure (5) de la barre de soudure (4), au moins une autre barre de soudure (4) est utilisé, les barres de soudure (4) disposées les unes à côté des autres avec un petit chevauchement, mais les unes derrière les autres légèrement décalées.

6. Procédé selon l'une des revendications 4 ou 5, **caractérisé en ce que** les barres de soudure (4) sont déroulées dans le même sens sur la surface de la section de film supérieure des deux sections de film superposées à souder.

7. Procédé selon la revendication précédente, **caractérisé en ce que** le déroulement des barres de soudure (4) se fait simultanément.

8. Procédé selon l'une des revendications 1 à 3, **caractérisé en ce que** pour réaliser une soudure dans une zone plus longue que la longueur de la surface de soudure (5) de la barre de soudure (4), la barre de soudure (4) après roulant sur la surface de la section de film supérieure des deux sections de film superposées à souder est au moins légèrement relevé depuis sa position de soudage, de préférence ramené vers sa position de repos, puis un mouvement relatif entre la barre de soudure (4) et le pile de marchandises (1) s'est fait, de préférence un déplacement de la barre de soudure (4) relatif d'une pile de marchandises (1) fixe dans le sens horizontal (flèche 10), puis la barre de soudure (4) est déplacée dans sa position de soudage pour souder la section suivante.

9. Procédé selon la revendication précédente, **caractérisé en ce que** la barre de soudure (4) est déroulée après chaque placement dans le même sens sur la surface de la section de film supérieur des deux sections de film superposées à souder.

10. Procédé selon la revendication 8, **caractérisé en ce que** la barre de soudure (4) est déroulée après chaque placement en sens inverse sur la surface de la section supérieure de film des deux sections de film superposées à souder.

11. Dispositif pour souder deux sections de film superposées situées au sommet d'une pile de marchandises (1) pour former une enveloppe, le dispositif comportant une barre de soudure (4) comportant une surface de soudure (5) incurvée de manière convexe, dans lequel au moins deux dispositifs de déplacement (8, 9) sont associés avec la barre de soudure (4) pour la passer de sa position de repos, dans laquelle la barre de soudure (4) est disposée à distance des sections de film à souder, en direction (flèche 11) du sommet de la pile de marchandises (1) dans sa position de soudage, dans laquelle la barre de soudure (4) est en contact avec la section de film supérieure des deux sections de film superposées à souder, en particulier pour mettre en oeuvre le procédé selon l'une des revendications précédentes, dans lequel le dispositif comprend en outre une commande pour les dispositifs de déplacement (8, 9), qui est réglée de telle sorte que les dispositifs de déplacement (8, 9) de la barre de soudure (4) peuvent être commandés indépendamment l'un de l'autre, de sorte que la barre de soudure (4) pendant le soudage des sections de film superposées peut être déroulée sur la surface de la section de film supérieure des deux sections de film superposées à souder.

12. Dispositif selon la revendication précédente, **caractérisé en ce que** le point le plus bas P de la surface de soudure (5) incurvée de manière convexe, est disposé environnement au centre par rapport à la longueur de la surface de soudure (5).

13. Dispositif selon la revendication précédente, **caractérisé en ce que** la surface de soudure (5) incurvée de manière convexe s'étend sur une section de trajet circulaire.

14. Dispositif selon l'une des revendications 11 à 13, **caractérisé en ce que** la longueur de la surface de soudure (5) est comprise entre 100 cm et 300 cm, de préférence entre 140 cm et 260 cm.

15. Dispositif selon l'une des revendications 11 à 14, **caractérisé en ce que** la barre de soudure (4) comporte deux extrémités opposées (6, 7) et est alignée dans sa position de repos de telle sorte que les deux extrémités (6, 7) soient à la même hauteur et que la courbure entre ces deux extrémités (6, 7) s'étend vers le bas et que la distance A entre une droite G reliant les deux extrémités opposées (6, 7) de la surface de soudure (5) en position de repos d'une part et le point le plus bas P d'autre part est entre 5 mm et 80 mm, de préférence entre 10 mm et 50 mm.

16. Dispositif selon l'une des revendications 11 à 15, **caractérisé en ce qu'**au moins un dispositif de déplacement (8, 9) est réalisé sous forme de cylindre.

17. Dispositif selon la revendication précédente, **caractérisé en ce qu'**au moins un cylindre est réalisé sous forme de cylindre pneumatique.

18. Dispositif selon l'une des revendications 16 ou 17, **caractérisé en ce qu'**au moins un cylindre est réalisé sous forme de cylindre hydraulique.

19. Dispositif selon l'une des revendications 11 à 18, **caractérisé en ce qu'**au moins un dispositif de déplacement (8, 9) est réalisé sous forme de crémaillère.
